# EUROPÄISCHE PATENTSCHRIFT

(11) **EP 0 677 917 B1**
(45) Veröffentlichungstag und Bekanntmachung des Hinweises auf die Patenterteilung: **08.07.1998**
(21) Anmeldenummer: 95200880.3
(22) Anmeldetag: 07.04.1995
(51) Int. Cl.: H02M 7/5387, H02M 3/337

(54) **Schaltungsanordnung mit einem Wechselrichter**
Circuit arrangement with an inverter
Disposition de circuit avec un onduleur

(30) Priorität: 15.04.1994 DE 4413163
(43) Veröffentlichungstag der Anmeldung: 18.10.1995
(73) Patentinhaber: Philips Patentverwaltung GmbH, 22335 Hamburg (DE); Philips Electronics N.V., 5621 BA Eindhoven (NL)
(72) Erfinder: Wagner, Bernhardt, D-22335 Hamburg (DE); van der Broeck, Heinz, D-22335 Hamburg (DE)
(74) Vertreter: Hartmann, Heinrich, Dipl.-Ing.

(56) Entgegenhaltungen:
- FR-A- 2 684 501
- US-A- 4 621 312

## Beschreibung

Die Erfindung bezieht sich auf eine Schaltungsanordnung mit einem Wechselrichter, der zwei parallele an eine Gleichspannungsquelle angeschlossene Schaltzweige aufweist, die jeweils zwei in Serie geschaltete, je mindestens einen Schalter und eine dazu antiparallele Diode umfassende Schaltglieder enthalten, von denen jeweils eines aus dem einen Schaltzweig mit einem Schaltglied aus dem anderen Schaltzweig ein Diagonalpaar bildet, über das eine Last mit einer bestimmten Polarität an eine Gleichspannungsquelle anschließbar ist, wobei beim Übergang von der einen Polarität zur anderen die Spannung an der Last zeitweise verschwindet, mit einer Steuerschaltung zum Öffnen und Schließen der Schalter derart, daß die Schaltglieder nacheinander ein- bzw. ausgeschaltet werden.

Eine solche Schaltungsanordnung ist aus der Literatur bekannt, z.B. aus dem Buch "Power Electronics", N. Mohan, T.M. Undeland, W.P. Robbins, 1989, John Wiley & Sons, Seite 123, bzw. aus der Patenschritt US-A-4 621 312.

Als "Schaltglied" wird dabei eine Kombination bezeichnet, die einen (oder mehrere parallel und/oder in Serie geschaltete) ein- und abschaltbare Schalter (z.B. einen IGBT-, einen MOS-Transistor oder einen anderen Halbleiterschalter) und dazu parallel eine Diode (Freilaufdiode) umfaßt, die durch die Gleichspannungsquelle in Sperrichtung betrieben ist. Als "Diagonalpaar" werden jeweils zwei Schaltglieder bezeichnet, die in unterschiedlichen Schaltzweigen angeordnet sind und über die die Last mit den beiden Anschlüssen einer Gleichspannungsquelle verbindbar ist, wobei das eine Diagonalpaar die Gleichspannung mit einer ersten Polarität und das andere Diagonalpaar die Gleichspannung mit einer zweiten, zur ersten entgegengesetzten Polarität der Last zuführt.

Bei Schaltungen dieser Art wird während des Betriebes in den Schaltgliedern elektrische Energie im Wärme umgesetzt. Neben einem Anteil, der während der stromführenden Phase entsteht (Leitverluste), umfassen diese Energieverluste einen Anteil, der während der Schaltvorgänge entsteht (Schaltverluste). Die Schaltverluste entstehen während der Schaltvorgänge, wenn ein nennenswerter Strom durch das Schaltglied fließt oder eine nennenswerte Spannung an seinen Klemmen anliegt. Die Schaltverluste sind proportional zur Schaltfrequenz.

Es ist bekannt, daß man diese Schaltverluste durch den Einsatz von Entlastungsnetzwerken bzw. sogenannter "Snubber", reduzieren kann. Diese Entlastungsnetzwerke versagen aber bzw. beeinträchtigen die Funktion des Wechselrichters, wenn sie einerseits für sehr große und andererseite für sehr kleine Ströme ausgelegt sein müssen und die Gleichspannungsquelle unterschiedliche Spannungspegel aufweisen kann. Derartige Anforderungen sind beispielsweise bei einem Röntgengenerator gegeben.

Würde man die eingangs genannte bekannte Schaltung aus diesen Gründen ohne solche Entlastungsnetzwerke aufbauen, dann ergäbe sich eine relativ hohe, je nach Steuerverfahren auch ungleichmäßige thermische Belastung der Schalter durch verlustbehaftete und weitgehend verlustfreie Ein- und Ausschaltvorgänge. Ein verlustbehafteter Einschaltvorgang ergibt sich für jeweils das Schaltglied, das als zweites innerhalb seines Diagonalpaares eingeschaltet wird, weil vor dem Einschalten die volle Gleichspannung über diesem Schaltglied liegt. Ein verlustbehaftetes Ausschalten ergibt sich für das in einem Diagonalpaar zuerst ausgeschaltete Schaltglied, weil dies im Ausschaltaugenblick noch den vollen Strom führt. Bei der bekannten Schaltung werden die Schaltglieder in dem einen Schaltzweig verlustbehaftet eingeschaltet und die Schaltglieder in dem anderen Schaltzweig verlustbehaftet ausgeschaltet. Außerdem stellen sich je nach Arbeitspunkt in den Schaltern und Dioden der beiden Schaltglieder unterschiedliche Stromverläufe ein, die zu unterschiedlichen Durchlaßverlusten führen. Diese unterschiedliche thermische Belastung der Schalter begrenzt die Maximalleistung des Wechselrichters, denn der Strom durch die Schaltglieder darf nur so groß gemacht werden, wie es das am stärksten belastete Schaltglied erlaubt.

Aufgabe der vorliegenden Erfindung ist es, eine Schaltung der eingangs genannten Art so auszugestalten, daß die Schaltglieder gleichmäßig belastet werden.

Diese Aufgabe wird erfindungsgemäß dadurch gelöst, daß die Steuerschaltung so ausgebildet ist, daß alle Schaltglieder nacheinander als zweites Schaltglied in ihrem Diagonalpaar eingeschaltet werden bzw. daß alle Schaltglieder nacheinander als zweites Schaltglied in ihrem Diagonalpaar ausgeschaltet werden.

Wenn die Schaltglieder in den beiden Diagonalpaaren auf diese Weise alternierend viermal nacheinander ein- und ausgeschaltet werden, wird erreicht, daß jedes Schaltglied einen verlustbehafteten und einen quasi verlustfreien Ein- und Ausschaltvorgang ausführt. Weiterhin treten dadurch in allen Schaltern gleich große Mittelund Effektivwerte des Stromes auf, so daß die Leitverluste in allen Schaltern immer identisch sind. Dadurch werden alle vier Schalter thermisch gleichmäßig beansprucht, so daß größere Ströme bzw. eine größere Maximalleistung des Wechselrichter zulässig sind.

Eine bevorzugte Weiterbildung der Erfindung sieht vor, daß die Steuerschaltung so ausgebildet ist, daß sich nach dem Einschalten beider Schaltglieder eines Diagonalpaares folgender Schaltzyklus ergibt:
a) Öffnen des ersten Schaltglliedes dieses Diagonalpaares,
b) Schließen des dazu in Serie liegenden Schaltgliedes des anderen Diagonalpaares,
c) Öffnen des zweiten Schaltgliedes des ersten Diagonalpaares,
d) Schließen des dazu in Serie liegenden Schaltliedes des anderen Diagonalpaares.

Durch diese Ausgestaltung der Erfindung wird erreicht, daß während des Freilaufs, d.h. zwischen der Rückflanke eines Spannungsimpulses an der Last und der Vorderflanke des darauf folgenden Spannungsimpulses mit der entgegengesetzten Polarität, keinerlei Energie von der Last in die Gleichspannungsquelle zurückgespeist werden kann. Da die elektrische Leistung somit nicht zwischen der Last und der Gleichspannungsquelle hin- und herpendelt, muß der Last bei jedem Spannungsimpuls nur die Leistung zugeführt werden, die dort tatsächlich benötigt wird (und nicht noch die elektrische Leistung, die anschließend wieder in die Gleichspannungsquelle zurückgespeist wird). Dadurch werden - gegenüber einem Wechselrichter mit einer solchen Rückspeisung - noch einmal die Schaltverluste reduziert und zusätzlich auch die Leitverluste, weil der Effektivwert der Ströme geringer ist.

Eine andere Weiterbildung der Erfindung sieht vor, daß der Wechselrichter als Serienresonanz-Wechselrichter ausgebildet ist. Grundsätzlich eignet sich die Erfindung auch für jeden anderen Wechselrichter. Wesentlich ist nur, daß der Laststrom zwischen der Rückflanke eines Spannungsimpulses und der Vorderflanke des nachfolgenden Spannungsimpulses seine Richtung umkehrt

Wegen dieser Bedingung kann die Schaltfrequenz nur in geringem Umfang geändert werden. Eine für die Leistungssteuerung geeignete Weiterbildung ist daher gekennzeichnet durch einen Pulsbreitenmodulator zur Steuerung der Schaltdauer der beiden Diagonalpaare.

Eine bevorzugte Ausgestaltung der Erfindung ist gekennzeichnet durch
- Mittel zum Erzeugen eines ersten periodischen und impulsförmigen Signals, dessen Vorderflanke das Abschalten des in einem Diagonalpaar zuletzt geschalteten Schaltgliedes bestimmt,
- Mittel zur Erzeugung eines zweiten periodischen und impulsförmigen Signals, dessen Vorderflanke gegenüber der Vorderflanke des ersten Signals um eine definierte Zeitspanne verzögert ist und das Einschalten des zuerst eingeschalteten Schaltgliedes in dem anderen Diagonalpaar definiert und dessen Rückflanke das Abschalten des zuerst in diesem Diagonalpaar abgeschalteten Schaltgliedes bestimmt, und
- Mittel zur Erzeugung eines dritten periodischen Signals, dessen Rückflanke gegenüber der Rückflanke des zweiten Signals (PWM) um eine definierte Zeitspanne verzögert ist und das Einschalten des in dem einen Diagonalpaar zuerst eingeschalteten Schaltdliedes definiert.

Dadurch wird sichergestellt, daß auch bei Verzögerungszeiten, die gegenüber der Periodendauer der Spannung nicht vernachlässigbar sind, die positiven Spannungsimpulse an der Last genauso lang sind wie die negativen; bei der eingangs genannten bekannten Schaltung hingegen würde sich einem solchen Fall ein unsymmetrischer zeitlicher Verlauf einstellen.

Da eine erfindungsgemäße Schaltungsanordnung in besonderem Maße die an einen Röntgengenerator zu stellenden Forderungen erfüllt, ist in weiterer Ausgestaltung ihre Anwendung in einem Röntgengenerator zur Erzeugung der Hochspannung für eine Röntgenröhre vorgesehen.

Die Erfindung wird nachstehend anhand der Zeichnungen näher erläutert. Es zeigen
- Fig. 1: ein schematisches Blockschaltbild eines Regelkreises eines Röntgengenerators, in dem die Erfindung anwendbar ist,
- Fig. 2: einen dafür geeigneten Wechselrichter,
- Fig. 3: den zeitlichen Verlauf verschiedener Signale und
- Fig. 4a bis 4p: den Schaltzustand der Schalter des Wechselrichters zu unterschiedlichen Zeitpunkten.

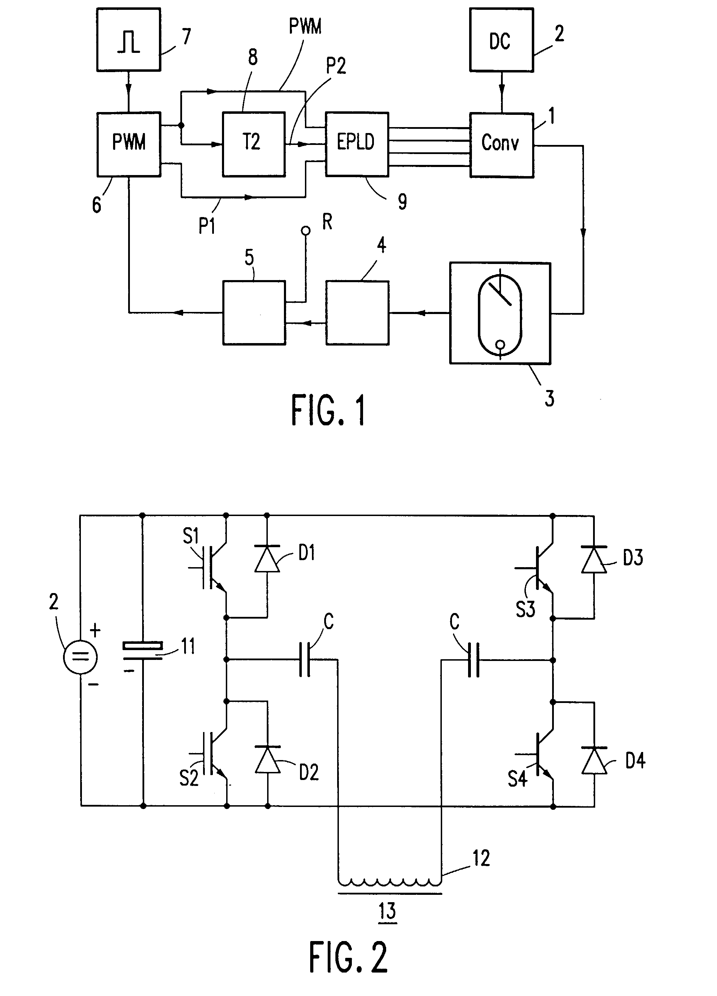

In Fig. 1 ist mit 1 ein an eine Gleichspannungsquelle 2 angeschlossener Wechselrichter bezeichnet. Der Wechselrichter 1 erzeugt über einen nicht näher dargestellten Hochspannungstransformator und eine Gleichrichtereinheit die Hochspannung für einen Röntgenstrahler 3. Die vom Wechselrichter zum Röntgenstrahler 3 gelieferte Leistung hängt außer von der Hochspannung am Röntgenstrahler auch von dem Strom durch den Röntgenstrahler ab, der in einem Bereich von mehreren Zehnerpotenzen variiert werden kann. Die Spannung an der Röntgenröhre 3 wird von einem Hochspannungsmeßteiler 4 gemessen.

In einem Regler 5 wird ein von der Differenz zwischen diesem Meßwert und einem Referenzwert R abhängiges Regelsignal erzeugt, das einem Pulsbreitenmodulator 6 zugeführt wird. Der Pulsbreitenmodulator wird mit der von einem Taktgenerator 7 gelieferten festen Frequenz von z.B. 40 kHz betrieben. Er liefert an einem ersten Ausgang ein rechteckförmiges Signal PWM mit der Taktfrequenz, dessen Breite durch das Regelsignal bestimmt wird. An einem zweiten Ausgang liefert der Pulsbreitenmodulator mit der Taktfrequenz synchronisierte Rechteckimpulse P1, deren Vorderflanke der Vorderflanke der Rechteckimpulse P um einen Zeitraum T1 vorauseilt. Das Signal PWM wird einer Impulsschaltung 8 zugeführt, die Impulse P2 erzeugt, deren Rückflanke gegenüber der Rückflanke von PWM um den Zeitraum T2 verzögert ist.

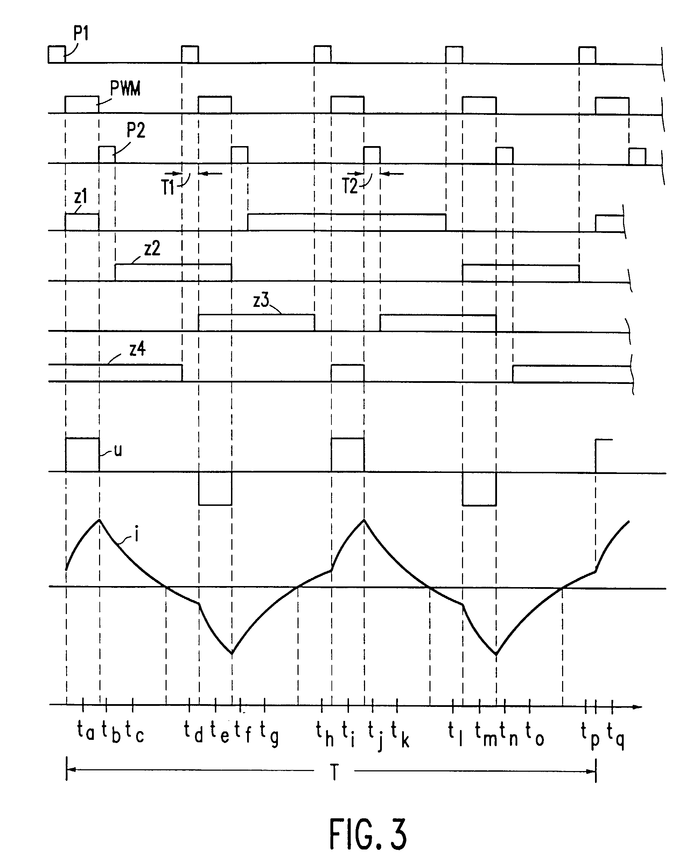

Der zeitliche Verlauf der drei Signale P1, PWM und P2 ist in den ersten drei Zeilen von Fig. 3 dargestellt. Es ist an sich nicht erforderlich, daß, wie aus der Zeichnung ersichtlich, die Rückflanke eines Impulses von P1 mit der Vorderflanke eines Impulses PWM zusammenfällt bzw. daß die Vorderflanke eines Impulses P2 mit der Rückflanke eines Impulses PWM zusammenfällt; wesentlich ist nur, daß die Vorderflanke von P1 der Vorderflanke von PWM um den Zeitraum T1 vorauseilt und daß die Rückflanke von P2 der Rückflanke von PWM um den Zeitraum T2 nacheilt. Die Zeiträume T1, T2 können gleich groß sein und sollten klein im Vergleich zur Periodendauer der Taktfrequenz sein. Wie noch erläutert, sollten aus Sicherheitsgründen T1 und T2 aber einen Mindestwert nicht unterschreiten.

Wenn der Pulsbreitenmodulator 6 neben dem pulsbreitenmodulierten Signal PWM nicht zusätzlich noch das Signal P1 erzeugen würde, könnten mit geeigneten Verzögerungs- und Impulsschaltungen die drei Signale aus dem Signal PWM abgeleitet werden.

Die drei Signale P1, PWM und P2 werden einer Logikschaltung 9 zugeführt, die diese Signale so verknüpft, daß an ihren vier Ausgängen ein Impulsmuster zur Steuerung der vier Schaltglieder des Wechselrichters 1 entsteht. Zweckmäßigerweise ist die Logikschaltung 9 ein EPLD- oder PLD-Baustein (Erasable Programable Logic Device), d.h. eine programmierbare Logikschaltung, deren Verknüpfungen durch Programmierung vorgebbar sind. Die auf diese Weise erzeugten vier Schaltsignale werden auf geeignete Weise z. B. über einen Optokoppler potentialgetrennt den Schalteingängen der im Wechselrichter 1 enthaltenen vier Schaltglieder zugeführt.

Bevor auf die Programmierung der Logikschaltung näher eingegangen wird, soll zunächst der Serienresonanz-Wechselrichter 1 anhand der Fig. 2 näher erläutert werden. Der Wechselrichter umfaßt eine Gleichspannungsquelle 2, die z.B. eine an ein ein- oder mehrphasiges Wechselspannungsnetz angeschlossene Gleichrichteranordnung enthalten kann, die einen parallelgeschalteten Kondensator 11 auflädt. Der Gleichspannungsquelle 2 sind zwei Schaltzweige parallelgeschaltet, von denen jeder zwei in Serie geschaltete Schaltglieder umfaßt. Jedes Schaltglied besteht aus einem ein- und abschaltbaren Schalter S1 . . . S4, dem eine Diode D1 . . . D4 so parallelgeschaltet ist, daß sie durch die Gleichspannungsquelle 10 in Sperrichtung betrieben wird. Die Dioden D1 . . . D4 wirken daher als Freilaufdiode.

Der Verbindungspunkt der in dem einen Schaltzweig befindlichen Schalter S1, S2 ist mit dem Verbindungspunkt der in dem anderen Schaltzweig befindlichen Schalter S3, S4 über die Serienschaltung eines Kondensators C, der Primärwicklung 12 des in Verbindung mit Fig. 1 erwähnten Hochspannungstransformators 13 und eines weiteren Kondensators C verbunden. Anstelle der beiden Kondensatoren könnte auch ein einziger Kondensator verwendet werden, dessen Kapazität der Kapazität der Serienschaltung beiden Kondensatoren entspricht. Die Kondensatoren bilden mit der Streuinduktivität des Transformators 13 einen Serienresonanzkreis, dessen Resonanzfrequenz im Bereich der halben Taktfrequenz liegen muß (im Beispiel also bei etwa 20 kHz), damit zwischen zwei aufeinanderfolgenden Spannungshalbwellen stets ein Stromnulldurchgang liegt. Es können auch weitere Impedanzen im Lastkreis enthalten sein.

Die den vier Schaltern S1 . . . S4 zugeführten Schaltsignale sind in der vierten bis siebten Zeile der Fig. 3 dargestellt und mit z1 . . . z4 bezeichnet. Dabei bedeutet ein (positiver) Impuls, daß der Schalter eingeschaltet (leitend) ist. Aus dem zeitlichen Verlauf der vier Schaltsignale ergibt sich, wie die Logikschaltung programmiert sein muß, damit sich das erwünschte Schaltsignal-Muster ergibt.

Man erkennt, daß mit jeder Vorderflanke eines Impulses P1 die Rückflanke eines der Schaltimpulse z1 . . . z4 zusammenfällt, und zwar in der Reihenfolge z4 - z3 - z1 - z2, und daß mit jeder Rückflanke eines Impulses P2 die Vorderflanke eines Schaltimpulses zusammenfällt (in der Reihenfolge z2 - z1 -z3 - z4). Mit der Vorderflanke eines PWM-Impulses fällt jeweils die Vorderflanke eines Schaltimpulses zusammen (in der Reihenfolge z1 - z3 - z4 - z2) und mit jeder Rückflanke eines PWM-Impulses fällt die Rückflanke eines Schaltimpulses zusammen (z1 - z2 - z4 - z3).

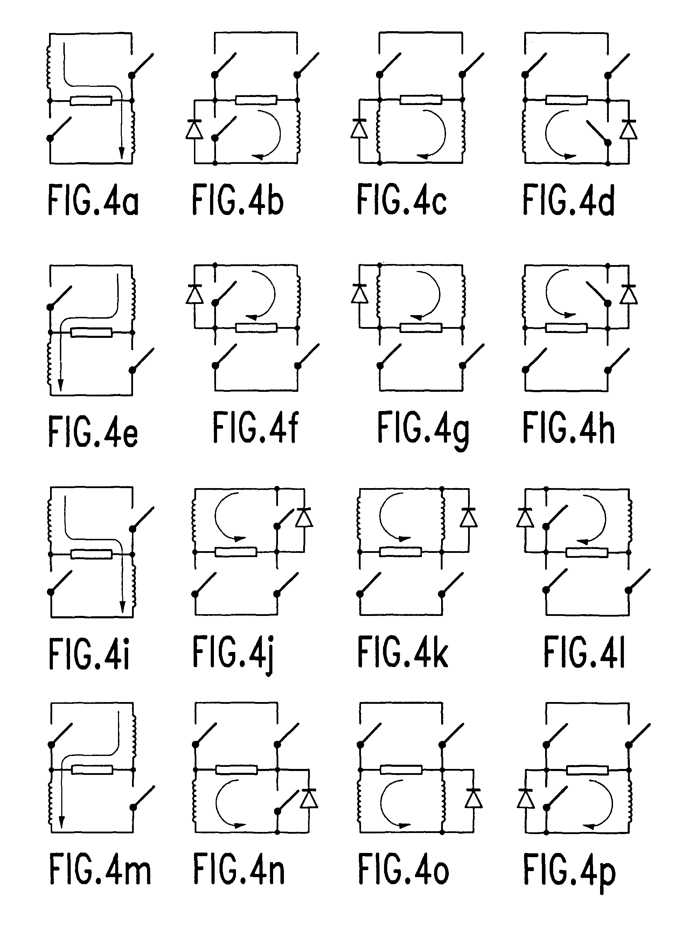

Die Schaltimpulse z1 . . . z4 erzeugen den in der drittletzten Zeile von Fig. 3 dargestellten zeitlichen Verlauf der Spannung u an den Serienresonanzkreis mit der halben Taktfrequenz sowie den Strom i durch den Serienresonanzkreis (vorletzte Zeile von Fig. 3). Auf der Zeitskala sind verschiedene Zeitpunkte tₐ . . . tₚ markiert und in den Figuren 4a bis 4p ist der Schaltzustand des Wechselrichters zu diesen Zeitpunkten schematisch angedeutet.

In sämtlichen Figuren 4a . . . 4p ist der Serienresonanzkreis durch eine Impedanz dargestellt, die IGBT-Transistoren des Wechselrichters sind als Schalter dargestellt, wobei der geschlossene (leitende bzw. eingeschaltete) Zustand fett hervorgehoben ist. Sämtliche Bezugszeichen sind fortgelassen; wenn im folgenden bei der Erläuterung dieser Figuren gleichwohl Bezugszeichen genannt werden, dann beziehen sich diese auf die Darstellung der Fig. 2. Die Freilaufdioden D1 . . . D4 sind nur dann dargestellt, wenn sie in dem dargestellten Zeitpunkt von dem Laststrom durchflossen werden.

Fig. 4a stellt den Schaltzustand zum Zeitpunkt tₐ dar, in dem die volle Gleichspannung am Serienresonanzkreis über das geschlossene Diagonalpaar S1, S4 am Serienresonanzkreis anliegt und in dem der Gleichspannungsquelle 2 Energie zur Speisung der Last entnommen wird. Der in Fig. 4a dargestellte Schaltzustand wird dadurch eingeleitet, daß der Schalter S1 geschlossen wird, nachdem zuvor schon der Schalter S4 geschlossen war. Dieser Schalter führt also einen harten (verlustbehafteten) Einschaltvorgang aus.

Der in Fig. 4b dargestellte Schaltzustand ergibt sich zum Zeitpunkt t_{b}, d.h. nach der Rückflanke eines Steuerimpulses PWM und vor der Rückflanke des darauffolgenden Steuerpulses P2. In diesen Schaltzustand gelangt der Wechselrichter durch hartes Ausschalten des Schalters S1. Der durch einen Pfeil angedeutete Strom fließt durch die Last in derselben Richtung weiter wie zuvor, wobei sich der Stromkreis über den Schalter S4 und die Diode D2 schließt. - Wenn S4 gleichzeitig mit S1 oder kurz danach ausgeschaltet worden wäre, dann würde der Stromkreis sich über die Freilaufdioden D2 und D3 schließen und dabei den Kondensator 11 aufladen, d.h., es würde Energie in die Gleichspannungsquelle zurückgespeist. Dies würde zu erhöhten Verlusten in den Schaltern führen, wie eingangs ausgeführt. Dadurch, daß zu jedem Zeitpunkt ein oder zwei Schalter eingeschaltet sind, wird wirksam verhindert, daß Energie von der Last zur Quelle zurückgespeist wird.

Fig. 4c stellt den Schaltzustand nach der Vorderflanke von z2 dar, und vor dem Nulldurchgang des Stromes i. Der Strom fließt also in der gleichen Richtung weiter wie zuvor und es ist jetzt der Schalter S2 eingeschaltet, der in demselben Schaltzweig liegt wie der zuvor ausgeschaltete Schalter S1. Da die Spannung über diesem Schalter aufgrund der leitenden Diode D2 schon vor dem Schaltvorgang nur einen geringen Wert hat und da weiterhin der Strom in dem Stromkreis in einer Richtung fließt, in der diese Halbleiterschalter S2 keinen Strom leiten kann, handelt es sich hierbei um einen verlustfreien (weichen) Einschaltvorgang des Schalters S2.

Für den Fachmann ist klar, daß das Einschalten des Schalters S2 dem Abschalten des im gleichen Zweig liegenden Schalters S1 nicht in so geringem zeitlichen Abstand folgen darf, daß die Gefahr eines Kurzschlusses besteht. Deshalb wird die Zeit T2 so bemessen, daß diese Gefahr mit sicherheit unterbunden wird; andererseits sollte die Zeit T2 nicht wesentlich größer sein als für einen kurzschlußfreien Übergang von S1 auf S2 erforderlich. Der Zeitraum T1 kann genauso bemessen sein; er kann aber auch kürzer sein, weil der Schalter bereits vor dem Übergang vom leitenden in den gesperrten Zustand stromlos ist.

Fig. 4d zeigt den Schaltzustand nach dem Nulldurchgang des Laststromes und nach der ersten Rückflanke des Schaltimpulses z4 aber vor der Vorderflanke des nächsten PWM-Impulses. Nulldurchgang des Stromes bedeutet, daß der Strom seine Richtung umgekehrt hat und nunmehr über den Schalter S2 und die Diode D3 fließt. Der Schalter S4 ist abgeschaltet, was nach dem Nulldurchgang verlustfrei erfolgen kann.

Die Schaltzustände tₑ . . . tₕ, deren Schaltzustände in den Figuren 4e . . . 4h dargestellt ist, haben in bezug auf den zweiten Rechteckspannungsimpuls U an der Last und für die dadurch eingeleitete Halbperiode der Spannung an der Last die gleiche zeitliche Lage wie die Zeitpunkte tₐ . . . t_{d} in bezug auf den ersten Rechteckspannungsimpuls. Für die Zeitunkte tᵢ . . . tₗ (dargestellt in den Figuren 4i . . . 4l) gilt das gleiche im Hinblick auf die dritte Halbperiode, und schließlich zeigen die Figuren 4m . . . 4p die Schaltzustände an den entsprechenden Zeitpunkten in bezug auf die vierte Halbschwingung von u. Infolgedessen zeigen die Figuren 4e . . . 4p ganz analoge Schaltzustände wie die Figuren 4a . . . 4d mit dem Unterschied, daß bei jeder Halbschwingung andere Schalter hart oder weich ein- oder ausschalten.

Nach dem harten Einschalten des Schalters S3 gelangt man zur Fig. 4e, bei der die Rechteckspannung an der Last die entgegengesetzte Polarität und der Strom durch die Last die entgegengesetzte Richtung hat wie bei Fig. 4a. Darauf folgt wieder ein harter Ausschaltvorgang - diesmal mit dem Schalter S2 (Fig. 4f), wonach wieder ein weicher Einschaltvorgang folgt (S1 - Fig. 4g) und dann ein weicher Ausschaltvorgang (S3 - Fig. 4h). Danach wird - diesmal durch hartes Einschalten von S4 - das Diagonalpaar S1, S4 aktiv (Fig. 4i), bis durch einen harten Abschaltvorgang von S4 die Energieabgabe der Gleichspannungsquelle blockiert wird (Fig. 4j). Es folgt wiederum ein weicher Einschaltvorgang (S2 - Fig. 4k) und ein weicher Ausschaltvorgang(S1 - Fig. 4l).

Im letzten Zyklus wird nach hartem Einschalten von S2 (Fig. 4m) und hartem Ausschalten von S3 (Fig. 4n) ein weicher Einschaltvorgang eingeleitet S4 - (Fig. 4o) und dann wieder ein weicher Ausschaltvorgang (S2 - Fig. 4p). Danach wird wieder S1 geschlossen, wonach sich der mit Fig. 4a eingeleitete Schaltzyklus wiederholt.

Die Figuren 4a bis 4p stellen also die Schaltzustände dar, die innerhalb einer Periode T (vergl. Fig. 3 unten) des Impulsmusters z1 . . . z4 ablaufen. Diese Periode entspricht zwei Perioden der Wechselspannung am Serienresonanzkreis bzw. vier Perioden der Taktfrequenz. Man erkennt, daß während des Freilaufs der Laststrom zweimal nacheinander über die positive Versorgungsspannungsleitung fließt (Fig. 4f bis 4h und 4j bis 4l) und zweimal nacheinander über die negative Versorgungsspannungsleitung (Fig. 4n bis 4p und 4b bis 4d).

Die in den Figuren 4a, 4e, 4i und 4m dargestellten Schaltzustände werden durch das harte Einschalten der Schalter in der folgenden Reihenfolge erreicht: S1-S3-S4-S2. Diese Reihenfolge wiederholt sich in allen weiteren Perioden T. Durch dieses zyklische Einschalten und durch den erfindungsgemäßen Übergang von der Rückflanke eines Spannungsimpulses bis zur Vorderflanke des folgenden Spannungsimpulses wird sichergestellt, daß alle Schalter "symmetrisch" belastet werden, d.h. jeder Schalter S1.....S4 wird während einer Periode einmal hart ein- und ausgeschaltet und einmal weich ein- und ausgeschaltet. In diesem Fall erfolgt auch das harte Ausschalten in einer zyklischen Folge, die antizyklisch zu der erstgenannten ist: S1-S2-S4-S3. Ähnliche zyklische Folgen ergeben sich für das weiche Ein- und Ausschalten.

Trotz dieser symmetrischen Belastung ergibt sich noch ein Unterschied, weil die Schalter S1 und S4 bei einem Spannungsimpuls hintereinander hart ein- und hart ausgeschaltet werden, während bei den Schaltern S2 und S3 auf ein hartes Einschalten zunächst ein weiches Ausschalten folgt. Dieser geringfügige Unterschied in der Belastung läßt sich dadurch vermeiden, daß bei dem auf den in Fig. 4p dargestellten Schaltzustand folgenden Zyklus das harte Einschalten zunächst nicht in der oben angegebenen Reihenfolge (S1-S3-S4-S2) erfolgt, sondern in der dazu antizyklischen Folge S1-S2-S4-S3, wonach sich die gesamte Folge periodisch wiederholt. Die Sequenz der hart eingeschalteten Schaltglieder sieht dann wie folgt aus: S1-S3-S4-S2-S1-S2-S4-S3 - und die Sequenz für das harte Ausschalten entsprechend: S1-S2-S4-S3-S4-S2-S1-S3. Die Periodendauer wäre dann doppelt so groß wie in Fig. 3 dargestellt.

Wie bereits erwähnt, liegt zwischen dem Einschalten der Spannung u und dem Einschalten der Spannung -u an der Last immer ein Freilauf über eine Diode und einen Transistor. Wenn man einen Freilauf, bei dem der Laststrom über die obere, positive Versorgungsleitung fließt, mit "+" bezeichnet und einen Freilauf über die untere, negative Versorgungsleitung mit "-", dann kann das für die Erfindung wesentliche Impulsmuster auch durch die Aufeinanderfolge der Freiläufe charakterisiert werden. Für die in Fig. 4a bis 4p dargestellten Schaltzustände gilt dann: - + + -, und entsprechend - + + - + + - - für die Version mit zyklischer und antizyklischer Schaltfolge.

## Patentansprüche

1. Schaltungsanordnung mit einem Wechselrichter (1), der zwei parallele an eine Gleichspannungsquelle angeschlossene Schaltzweige aufweist, die jeweils zwei in Serie geschaltete, je mindestens einen Schalter (S1...S4) und eine eine dazu antiparallele Diode (D1...D4) umfassende Schaltglieder enthalten, von denen jeweils eines aus dem einen Schaltzweig mit einem Schaltglied aus dem anderen Schaltzweig ein Diagonalpaar bildet, über das eine Last mit einer bestimmten Polarität an eiine Gleichspannungsquelle anschließbar ist, wobei beim Übergang von der einen Polarität zur anderen die Spannung an der Last zeitweise verschwindet, mit einer Steuerschaltung (9) zum Öffnen und Schließen der Schalter derart, daß die Schaltglieder nacheinander hart oder weich ein- bzw. ausgeschaltet werden, dadurch gekennzeichnet, daß die Steuerschaltung (9) so ausgebildet ist, daß alle Schaltglieder nacheinander (z.B. S1-S3-S4-S2) als zweites Schaltglied in ihrem Diagonalpaar eingeschaltet werden bzw. daß alle Schaltglieder als zweites Schaltglied in ihrem Diagonalpaar ausgeschaltet werden (S1-S2-S4-S3).

2. Schaltungsanordnung nach Anspruch 1, dadurch gekennzeichnet, daß die Steuerschaltung (9) so ausgebildet ist, daß nach dem Einschalten beider Schaltglieder (z.B. S1, S4) eines Diagonalpaares folgender Schaltzyklus ergibt:
a) Öffnen des ersten Schaltgliedes (z.B. S1) dieses Diagonalpaares,
b) Schließen des dazu in Serie liegenden Schaltgliedes (S2) des anderen Diagonalpaares (S2, S3),
c) Öffnen des zweiten Schaltgliedes (S4) des ersten Diagonalpaares (S1, S4),
d) Schließen des dazu in Serie liegenden Schaltgliedes (S3) des anderen Diagonalpaares.

3. Schaltungsanordnung nach Anspruch 1, dadurch gekennzeichnet, daß der Wechselrichter (1) als Serienresonanz-Wechselrichter ausgebildet ist.

4. Schaltungsanordnung nach Anspruch 1, gekennzeichnet durch einen Pulsbreitenmodulator (6) zur Steuerung der Schaltdauer der beiden Diagonalpaare (S1, S4; S2, S3).

5. Schaltungsanordnung nach einem der vorhergehenden Ansprüche, gekennzeichnet durch
- Mittel (6) zum Erzeugen eines ersten periodischen und impulsförmigen Signals (P1), dessen Vorderflanke das Abschalten des in einem Diagonalpaar zuletzt geschalteten Schaltgliedes bestimmt,
- Mittel (6) zur Erzeugung eines zweiten periodischen und impulsförmigen Signals (PWM), dessen Vorderflanke gegenüber der Vorderflanke des ersten Signals um eine definierte Zeitspanne (T1) verzögert ist und das Einschalten des zuerst eingeschalteten Schaltgliedes in dem anderen Diagonalpaar definiert und dessen Rückflanke das Abschalten des zuerst in diesem Diagonalpaar abgeschalteten Schaltgliedes bestimmt, und
- Mittel (6, 8) zur Erzeugung eines dritten periodischen Signals (P2), dessen Rückflanke gegenüber der Rückflanke des zweiten Signals (PWM) um eine definierte Zeitspanne (T2) verzögert ist und das Einschalten des in dem einen Diagonalpaar zuerst eingeschalteten Schaltgliedes definiert.

6. Schaltungsanordnung nach einem der vorhergehenden Ansprüche, gekennzeichnet durch ihre Anwendung in einem Röntgengenerator zur Erzeugung der Hochspannung für eine Röntgenröhre (3).

7. Schaltungsanordnung nach Anspruch 1, dadurch gekennzeichnet, daß das harte Einschalten der Schaltglieder zunächst in einer zyklischen Folge (z.B. S1-S3-S4-S2) und dann in einer dazu antizyklischen Folge (S1-S2-S4-3) erfolgt, bevor sich die Schaltfolge periodisch wiederholt.

## Claims

1. A circuit arrangement which comprises an inverter (1) with two parallel switching branches which are connected to a DC voltage source and each of which comprises two series-connected switching members, each of which comprises at least one switch (S1 ... S4) and an antiparallel-connected diode (D1 ... D4), a switching member in one switching branch each time constituting a diagonal pair in conjunction with a switching member in the other switching branch, a load with a given polarity being connectable to a DC voltage source *via* said diagonal pair, the voltage across the load temporarily disappearing upon the change-over from one polarity to the other, and also comprises a control circuit (9) for opening and closing the switches in such a manner that the switching members are successively switched on and off in a hard or soft fashion, characterized in that the control circuit (9) is constructed so that all switching members are successively switched on (for example, S1-S3-S4-S2) as the second switching member in their respective diagonal pair or that all switching members are switched off as the second switching member in their diagonal pair (S1-S2-S4-S3).

2. A circuit arrangement as claimed in Claim 1, characterized in that the control circuit (9) is constructed so that the following switching cycle occurs after the switching on of both switching members (for example, S1, S4) of a diagonal pair:
a) opening of the first switching member (for example, S1) of the relevant diagonal pair,
b) closing of the series-connected switching member (S2) of the other diagonal pair (S2, S3),
c) opening of the second switching member (S4) of the first diagonal pair (S1, S4),
d) closing of the series-connected switching member (S3) of the othe diagonal pair.

3. A circuit arrangement as claimed in Claim 1, characterized in that the inverter (1) is constructed as a series resonant inverter.

4. A circuit arrangement as claimed in Claim 1, characterized in that it comprises a pulse width modulator (6) for controlling the switching period of the two diagonal pairs (S1, S4; S2, S3).

5. A circuit arrangement as claimed in one of the preceding Claims, characterized in that it comprises
- means (6) for generating a first periodic and pulse-shaped signal (P1) whose leading edge determines the switching off of the switching member switched last in a diagonal pair,
- means (6) for generating a second periodic and pulse-shaped signal (PWM) whose leading edge has been delayed a defined period of time (T1) relative to the leading edge of the first signal and defines the switching on of the switching member switched on first in the other diagonal pair, its trailing edge determining the switching off of the switching member switched off first in this diagonal pair, and
- means (6, 8) for generating a third periodic signal (P2) whose trailing edge has been delayed a defined period of time (T2) relative to the trailing edge of the second signal (PWM) and defines the switching on of the switching member switched on first in the one diagonal pair.

6. A circuit arrangement as claimed in one of the preceding Claims, characterized in that it is used in an X-ray generator for generating a high voltage for an X-ray tube (3).

7. A circuit arrangement as claimed in Claim 1, characterized in that the hard switching on of the switching members first takes place in a cyclic order (for example, S1-S3-S4-S2) and subsequently in an anticyclic order (S1-S2-S4-S3) before the switching sequence is periodically repeated.

## Revendications

1. Circuit avec un onduleur (1) qui présente deux bras de circuit parallèles raccordés à une source de tension continue, qui contiennent respectivement deux organes de commutation montés en série comprenant au moins un commutateur (S1...S4) et une diode antiparallèle à celui-ci (D1...D4) dont respectivement l'un des organes d'un des bras de circuit forme avec un organe de commutation de l'autre bras de circuit une paire de diagonale par l'intermédiaire de laquelle une charge d'une polarité déterminée peut être raccordée à une source de tension continue, la tension à la charge disparaissant temporairement lors de la transition d'une polarité à l'autre, avec un circuit de commande (9) en vue de l'ouverture et de la fermeture des commutateurs de telle sorte que les organes de commutation soient successivement mis sous tension ou hors tension de manière fixe ou souple, caractérisé en ce que le circuit de commande (9) est conçu de telle sorte que tous les organes de commutation soient successivement sous tension (par exemple, S1-S3-S4-S2) comme deuxième organe de commutation dans sa paire diagonale ou que tous les organes de commutation soient successivement mis hors tension comme deuxième organe de commutation dans sa paire diagonale (S1-S2-S4-S3).

2. Circuit selon la revendication 1, caractérisé en ce que le circuit de commande (9) est conçu de telle sorte qu'après la mise sous tension des deux organes de commutation (par exemple, S1, S4) d'une paire diagonale, le cycle de commutation suivant s'installe :
a) ouverture du premier organe de commutation (par exemple, S1) de cette paire diagonale;
b) fermeture de l'organe de commutation (S2) monté en série de l'autre paire diagonale (S2, S3);
c) ouverture du deuxième organe de commutation (S4) de la première paire diagonale (S1, S4);
d) fermeture de l'organe de commutation (S3) monté en série de l'autre paire diagonale.

3. Circuit selon la revendication 1, caractérisé en ce que l'onduleur (1) est conçu comme un onduleur à résonance en série.

4. Circuit selon la revendication 1, caractérisé par un modulateur de largeur d'impulsion (6) en vue de la commande de la durée de commutation des deux paires diagonales (S1, S4; S2, S3).

5. Circuit selon l'une des revendications précédentes, caractérisé par :
- des moyens (6) en vue de la production d'un premier signal périodique par impulsion (P1) dont le flanc de montée détermine la mise hors tension de l'organe de commutation monté en dernier lieu dans une paire diagonale,
- des moyens (6) de production d'un deuxième signal périodique par impulsion (PWM) dont le flanc de montée est retardé par rapport au flanc de montée du premier signal d'un intervalle de temps (T1) défini qui définit la mise sous tension de l'organe de commutation préalablement mis sous tension dans l'autre paire diagonale et dont le flanc de descente détermine la mise hors tension de l'organe de commutation préalablement mis hors tension dans cette paire diagonale, et
- des moyens (6,8) de production d'un troisième signal périodique (P2) dont le flanc de descente est retardé par rapport au flanc de descente du deuxième signal (PWM) d'un intervalle de temps (T2) défini et qui définit la mise sous tension de l'organe de commutation préalablement mis sous tension dans une paire diagonale.

6. Circuit selon l'une des revendications précédentes, caractérisé par son application dans un générateur de rayons X en vue de la production de la haute tension pour un tube à rayons X (3).

7. Circuit selon la revendication 1 caractérisé en ce que la mise sous tension fixe des organes de commutation se déroule d'abord dans une séquence cyclique (par exemple, S1-S3-S4-S2) et ensuite dans une séquence anticyclique à celle-ci (S1-S2-S4-S3) avant que la séquence de commutation ne se reproduise périodiquement.
